# EUROPÄISCHE PATENTSCHRIFT

(11) **EP 2 005 054 B1**
(45) Veröffentlichungstag und Bekanntmachung des Hinweises auf die Patenterteilung: **13.03.2013**
(21) Anmeldenummer: 07723875.6
(22) Anmeldetag: 02.04.2007
(51) Int. Cl.: F16L 41/08, F16L 5/10

(54) **ANSCHLUSSVORRICHTUNG FÜR EINE NEBENROHRLEITUNG**
CONNECTING DEVICE FOR A BRANCH PIPELINE
DISPOSITIF DE RACCORDEMENT POUR CONDUIT TUBULAIRE SECONDAIRE

(30) Priorität: 05.04.2006 DE 202006005685 U
(43) Veröffentlichungstag der Anmeldung: 24.12.2008
(73) Patentinhaber: REHAU AG + Co, 95111 Rehau (DE)
(72) Erfinder: LEIHBECHER, Heiko, 90530 Wendelstein (DE); HENDEL, Roland, 91086 Aurachtal (DE)
(86) Internationale Anmeldenummer: PCT/EP2007/002934
(87) Internationale Veröffentlichungsnummer: WO 2007/112992

(56) Entgegenhaltungen:
- EP-A1- 0 795 712
- EP-A2- 1 207 332
- AU-A- 3 619 378
- DE-A1- 2 351 499
- DE-U- 1 919 817
- DE-U1- 9 207 041
- GB-A- 2 323 904

## Beschreibung

Die Erfindung bezieht sich auf eine Anschlussvorrichtung für eine Nebenrohrleitung in Kombination mit einer Queröffnung in einer Hauptleitung, in einem Schacht oder in einer Wand, umfassend einen hohlstopfenförmigen, relativ weichen Elastomereinsatz, dessen Außenseite an die Queröffnung angepasst ist und dessen Innenseite einen konischen Schraubbereich aufweist, und einen relativ härteren Anschlussstutzen, der ein Eingriffsende, einen konischen Mittelteil mit Außengewinde und ein Antriebsende aufweist. Die nächstliegende AU 36 193 78 A offenbart zudem, dass der Elastomereinsatz mit Bezug auf die Queröffnung ein inneres Ende mit einem Anschlagwulst aufweist, der - bei montierter Anschlussvorrichtung - am inneren Rand der Queröffnung anliegt, wobei der Anschlussstutzen infolge des konischen Schraubbereichs den Elastomereinsatz gegen die Laibung der Queröffnung presst und der Anschlagswulst gegen den inneren Rand der Queröffnung gedrückt wird.

Ein Rezeß - wie in der DE 92 07 041 U1 beschrieben - erschwert lediglich ein Herausdrücken des Elastomereinsatzes durch den Innendruck in der Hauptleitung. Der Anschlagswulst der DE 19 19 817 U dient nur zur Einschiebebegrenzung und liegt - bei montierter Anschlussvorrichtung - an der Außenseite. Der Dichtkragen der EP 1 207 332 A2 und der Abdeckteil der GB 2 323 904 liegen nur auf der Außenseite auf.

Eine weitere Anschlussvorrichtung ist aus der EP 0 795 712 A1 bekannt und insbesondere zur Abdichtung einer nachträglichen Querbohrung in Betonrohren und Betonschächten ausgebildet. Diese Betonformteile weisen gewöhnlich eine beträchtliche Wandstärke, verglichen mit der Wandstärke von Kunststoffrohren, auf, so dass der Elastomereinsafz relativ großflächig in der Laibung der Queröffnung anliegt und damit der Nebenrohrleitungsanschluss sicher in der Queröffnung des Betonformtells verankert ist. Kräfte, die auf die Nebenrohrleitung einwirken, führen dann nicht so leicht zu Undichtigkeiten am Ansch!uss der Nebenrohrleitung. Wenn die bekannte Anschlussvorrichtung mit einer Queröffnung einer Kunststoffrohrleitung zusammen wirkt, wird bedeutend weniger Auflagefläche
angetroffen und auch die Einspannkräfte, mit denen der Elastomereinsatz in der Querbohrung eingespannt ist, können nicht so groß sein wie bei einem Betonrohr. Infolgedessen kommt es eher zu Undichtigkeiten des Anschlusses im Falle von Kunststoffrohren.

Bei einer bekannten Einrichtung zur Verbindung von Rohren (DE-A-23 51 499) werden Rohre aus thermoplastischem kunststoff oder faserverstärktem Kunstharz quer angebohrt und der Rand der Querbohrung mit einer Dichtungsmanschette umgeben. Die Dichtungsmanschette weist innen ein Schraubgewindeprofil auf zylindrischer Fläche auf. In dieses Schraubgewinde greift ein Anschlussstutzen ein, der ein Muffenende aufweist, in das die Nebenrohrleitung gesteckt wird. Das Schraubgewindeprofil nimmt hinsichtlich Gewindehöhe zum Eingriffsende des Anschlussstutzens hin ab. Die Abmessung der Dichtungsmanschette in Richtung der Nebenrohrleitung ist wesentlich größer als die Dicke der Rohrwand der Hauptrohrleitung, so dass sich die Hauptmasse der Dichtungsmanschette und damit auch der größte Teil des Schraubgewindeprofils außerhalb der Überdeckung mit der Rohrwandqueröffnung befindet. Die Dichtungsmanschette ist außerdem mit einer Nut oder wenigstens mit einem Flansch versehen, und der Umfangsrand der Rohrwandqueröffnung ist einschnappend in diese Nut einsetzbar und wird dort eingeklemmt, wenn der Anschlussstutzen in die Dichtungsmanschette eingeschraubt wird, bis die Dichtungsmanschette an einer Schulter des Anschlussstutzens abdichtet. Ein Nachspannen der Dichtungsmanschette ist nicht vorgesehen.

Anschlüsse an Kanalrohre aus Kunststoff werden in der Praxis mit Anschlussvorrichtungen ausgeführt, die ein Anschlussoberteil und ein Anschlussunterteil aufweisen (www.funkegruppe.de). Das Anschlussunterteil weist einen Flansch auf, der an den Innenrand der Querbohrung angepasst ist und der mittels Gewinde, das außerhalb der Querbohrung am Anschlussunterteil vorhanden ist, gegen den Innenrand der Querbohrung gezogen wird. Diese Art des Anschlusses erfordert eine genaue Bearbeitung des Innenrandes der Querbohrung, da die Abdichtung zum Anschlussunterteil nur an dieser Stelle erfolgt. Außerdem ist die Abdichtung gegenüber auf den Anschluss einwirkende Kräfte empfindlich, da der Abdichtflansch schon bei leichter Verformung des Kunststoffrohres vom Innenrand der Querbohrung abhebt.

Der Erfindung liegt die Aufgabe zugrunde, eine Anschlussvorrichtung der eingangs angegebenen Art so auszubilden, dass sie sich zum Anschluss von Nebenrohrleitungen an Hauptleitungen oder Schächten auch aus Kunststoff eignet und dabei besonders sicher abdichtet.

Die gestellte Aufgabe wird durch die Ausbildung der Anschlussvorrichtung gemäß Anspruch 1 gelöst und durch die Gestaltung gemäß weiteren Ansprüchen ausgestaltet und weiterentwickelt. Im Einzelnen ist ein hohlstopfenförmiger, relativ weicher Elastomereinsatz vorgesehen, dessen Außenseite an die Queröffnung angepasst ist und zu dieser abdichten soll, während die Innenseite einen konischen Schraubbereich aufweist, der mit dem relativ härteren Anschlussstutzen zusammenarbeitet und gegenüber dessen Außenseite abdichtet. Der Anschlussstutzen weist ein Eingriffsende, einen konischen Mittelteil mit Außengewinde und ein Antriebsende auf, um den Anschlussstutzen anzutreiben und in das Innengewinde des Elastomereinsatzes einzuschrauben. Am Elastomereinsatz ist ferner ein Anschlagswulst vorgesehen, der, relativ zur Queröffnung und zur Hauptleitung gesehen, das innere Ende des Elastomereinsatzes bildet und bei montierter Anschlussvorrichtung am inneren Rand der Queröffnung abdichtend anliegt. Infolge der Konizität des Gewindebereichs gibt es eine Kraftkomponente auf den Anschlussstutzen in Richtung aus der Queröffnung heraus, was zu einer Krafteinwirkung auf den Elastomereinsatz in eben dieser Richtung nach außen führt. Der Anschlagswulst am inneren Ende des Elastomereinsatzes wird dadurch gegen den inneren Rand der Queröffnung gedrückt, was zu einer zusätzlichen Abdichtung an diesem inneren Rand der Queröffnung führt. Der relativ weiche Wulst hat die Tendenz des Ausweichens, was jedoch durch das Eingriffsende des relativ härteren Anschlussstutzens verhindert wird. Zweckmäßigerweise weist der Elastomereinsatz auf der Innenseite seines Wülstendes eine umlaufende Stützrippe auf, über die eine Stützkraft vom Eingriffsende des Anschlussstutzens her auf den Stützwulst eingeleitet wird.

Die Erfindung wird anhand der Zeichnung beschrieben. Dabei zeigt:
- Fig. 1: einen Anschlussstutzen, von der Seite gesehen, teilweise geschnitten,
- Fig. 2: eine erste Ausführungsform eines Elastomereinsatzes,
- Fig. 3: eine zweite Ausführungsform eines Elastomereinsatzes,

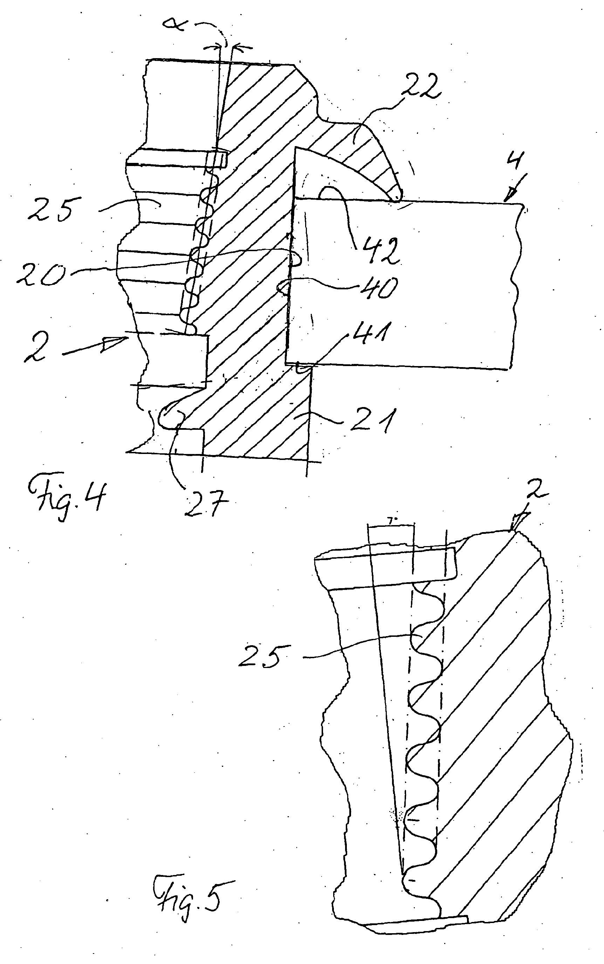

- Fig. 4: eine vergrößerte Einzelheit aus Fig. 2 und
- Fig. 5: eine vergrößerte Einzelheit aus Fig. 4.

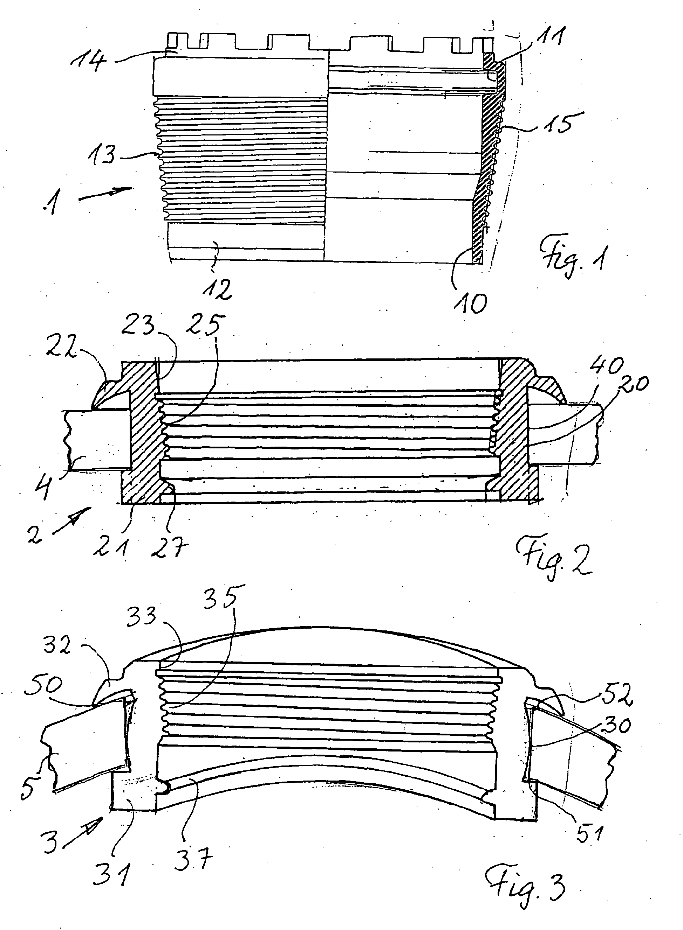

Der in Fig. 1 gezeigte Anschlussstutzen 1 besteht aus Kunststoff, wie er im Kanalrohrleitungsbau verwendet wird, während die in Fig. 2 und 3 dargestellten Dichtungen 2 und 3 aus Elastomer bestehen, das im Verhältnis zu dem Kunststoff des Anschlussstutzens 1 relativ weich ist. In Fig. 2 und 3 sind noch Wandungen 4 und 5 einer Hauptleitung oder eines Schachtes angedeutet, die im Ausführungsbeispiel aus Kunststoff bestehen sollen.

Der Anschlussstutzen 1 weist einen Hohlraum 10 auf, in den die nicht dargestellte Nebenrohrleitung eingreift und die mittels einer nicht dargestellten Dichtung in einer Dichtungsnut 11 nach außen abgedichtet wird. Am Anschlussstutzen können drei Abschnitte unterschieden werden, nämlich ein Eingriffsende 12, ein konischer Mittelteil 13 und ein Antriebsende 14. Der konische Mittelteil 13 ist mit abgerundetem Außengewinde 15 besetzt.

Die Dichtungen 2, 3 sind zum Einsatz in einer Queröffnung 40, 50 der Wandung 4, 5 ausgebildet und weisen zu diesem Zweck eine im Großen und Ganzen zylindrische Dichtfläche 20 bzw. 30 an der Außenseite auf. Die Dichtfläche 20, 30 wird durch einen Anschlagswulst 21, 31 und einen Dichtlippenkragen 22, 32 begrenzt. Die Dichtung besitzt eine Innenseite 23, 33 mit einem konischen Schraubbereich 25, 35 und mit einer umlaufenden Stützrippe 27, 37.

Der Elastomereinsatz 2 ist für die Abdichtung einer Queröffnung 40 in einer ebenen Wand 4 ausgebildet, kann aber auch bei Queröffnungen in großen Rohren verwendet werden, deren Wandung als schwach gekrümmt angesehen werden kann. Dabei ist es möglich, den Anschlagswulst 21 an die Rohrinnenwand beizuziehen.

Der Elastomereinsatz 3 ist zur Verwendung bei einer Queröffnung 50 in einer Rohrwandung 5 gedacht und ist prinzipiell in gleicher Weise wie der Elastomereinsatz 2 aufgebaut. Zusätzlich erfolgt eine Anpassung an den inneren Rand 51 und den äußeren Rand 52 der Querbohrung 50. Wenn nämlich die Querbohrung nicht durch eine ebene Wandung 4 eingebracht wird, wo die Ränder 41, 42 der Bohrung 40 jeweils in parallelen Ebenen liegen, folgen die Bohrungsränder 51 und 52 im Falle eines Rohres 5 jeweils einer Raumkurve, die Eigenschaften einer Sattelfläche aufweist, d. h. in der Zeichnung gibt es zwei "obere" sich gegenüber stehende Randabschnitte und zwei "untere" sich gegenüber stehende Randabschnitte, die sinusförmig ineinander übergehen. Um an dem inneren Rand 51 dicht anzuliegen, sollte der Anschlagswulst 31 der beschriebenen Raumkrümmung folgen. Für jeweilige Nenndurchmesser des Hauptleitungsrohrs gibt es somit angepasste Formen der Anschlussvorrichtung. Es sei bemerkt, dass die umlaufende Stützrippe 37 zweckmäßigerweise ebenfalls der Raumkrümmung des Randes 51 der Queröffnung 50 angepasst wird.

Wenn Kunststoffrohre oder Tonrohre als Hauptleitung verwendet werden, werden, im Gegensatz zu den Verhältnissen bei Betonrohren, relativ glatte Oberflächen der Laibung der Queröffnung erzeugt. Bei einer solchen Güte der Oberfläche benötigt man keine große Abdichtoberfläche, im Gegensatz zu rauen Betonoberflächen. Bei relativ glatten, abzudichtenden Flächen ist es günstiger, mit hohen Flächenpressungen in schmalen Abdichtzonen zu arbeiten. Der Dichtbereich 30 an der Außenseite des Elastomereinsatzes 3 wird deshalb bevorzugt ballig ausgeführt, so dass die Abdichtung zur Queröffnung hin im wesentlichen entlang einer schmalen, konvex gekrümmten Zone erfolgt. Die Kanten an den Rändern 51, 52 der Queröffnung 50 liegen zudem bei balliger Ausführung der Abdichtfläche 30 frei, so dass irgendwelcher Restgrad an diesen Kanten die Abdichtungswirkung des Elastomereinsatzes 3 nicht beeinträchtigt.

Um Schmutz vom unmittelbaren Bereich der Queröffnung 40 bzw. 50 fernzuhalten, ist der Dichtlippenkragen 22 bzw. 32 vorgesehen. Der Dichtlippenkragen 22 bzw. 32 ist in hohem Maße flexibel und kann sich an unterschiedliche Dicken der Wandung 4 bzw. 5 anpassen. Im Falle von gekrümmten Wandungen 5 kommt noch die Raumkrümmung des äußeren Bohrungsrandes 52 hinzu, an die sich der Dichtlippenkragen 32 anpassen muss. Wenn man die Stützrippe 37 mit Raumkrümmung herstellt, wird man auch den Dichtlippenkragen 32 mit derartiger Raumkrümmung herstellen.

Das Außengewinde 15 des Anschlussstutzens 1 passt in das Innengewinde 25 bzw. 35 des Elastomereinsatzes 2 bzw. 3. In beiden Fällen wird der Öffnungswinkel α des Konus, auf dem das Gewinde liegt, gleich gemacht und kann im Bereich von 5° bis 12° gewählt werden, wobei ein Winkel α von 7° bevorzugt wird. Die Profilform des Gewindes ist vorzugsweise ein sogenanntes Rundgewinde. Wegen des relativ weichen Materials des Elastomereinsatzes 2 bzw. 3 und wegen des Konus, entlang welchem das Gewinde verläuft, ist es möglich, zwischen Innengewinde und Außengewinde abzudichten, was sonst bei zylindrischem Gewinde nicht möglich ist. Auch die Anlage der Innenseite 10 des Eingriffsendes 12 an der Stützrippe 27 bzw. 37 führt zur Abdichtung.

Bei der am Markt befindlichen Bauform von Anschlüssen an Kunststoffrohre (www.funkegruppe.de) ist das Verhältnis der Flächengröße der Dichtfläche des Anschlussunterteils zu der Gesamtfläche der Außenseite des Anschlussunterteils sehr klein, weil nur am Hintergriffsflansch des Anschlussunterteils abgedichtet wird. Bei der erfindungsgemäßen Anschlussvorrichtung dagegen ist das Verhältnis der Flächengröße der Dichtflächen des Elastomereinsatzes zu der Flächengröße der Außenseite des Elastomereinsatzes wesentlich größer und liegt im Bereich von 0,1 bis 0,5 und vorzugsweise im Bereich von 0,15 bis 0,3. Der Grund hierfür ist, dass nicht nur am inneren Rand 41 bzw. 51 der Queröffnung abgedichtet wird, sondern auch in der Laibung 40 der Queröffnung. Wegen dieses größeren Verhältnisses der Dichtflächen zu der Außenseite des Elastomereinsatzes kann die Anschlussvorrichtung auch für Hauptrohrleitungen eingesetzt werden, bei denen die Queröffnung nicht mit der Güte hergestellt werden kann wie bei Kunststoffrohren.

Wie erwähnt, dient der Dichtlippenkragen 22 zur Abweisung von Schmutz gegenüber der Queröffnung in der Hauptleitung. Zu diesem Zweck braucht nur die Randkante des Dichtlippenkragens 22, die in der Zeichnung als abgerundete Spitze erscheint, auf der Außenseite der Hauptleitung aufzuliegen. Der flächenmäßige Auflageanteil zur Gesamtfläche der Anlageseite des Dichtlippenkragens 22 liegt im Bereich zwischen 0,05 und 0,3 und vorzugsweise im Bereich zwischen 0,1 und 0,15. Obwohl der Dichtlippenkragen 22 keine große Auflagekraft erzeugt, ist der Auflagedruck infolge der schmalen Auflagefläche relativ hoch, was die Abdichtung begünstigt.

Zur Montage der Anschlussvorrichtung in eine Queröffnung 40, 50 wird der Elastomereinsatz 2 bzw. 3 an dem Ende mit dem Anschlagswulst 21 bzw. 31 zusammengedrückt, so dass das Ende mit dem Wulst 21 durch die Queröffnung hindurch ins Innere der Hauptleitung oder des Schachtes oder hinter die Wand eingeführt werden kann und sich der Wulst dort ausbreitet und die Rohrwand oder ebene Wand hintergreift. Der Elastomereinsatz wird dann nach außen gezogen, bis der Anschlagswulst 21 bzw. 31 gut an der Innenseite der Hauptleitung, des Schachtes oder der Wand, nämlich am Bohrungsrand 41 bzw. 51, anliegt. Alsdann wird der Anschlussstutzen 1 mit seinem Eingriffsende 12 in den Hohlraum 23 bzw. 33 des Elastomereinsatzes eingeführt und durch Verschrauben festgespannt. Der härtere Anschlussstutzen 1 dehnt dabei den weicheren Elastomereinsatz 2 bzw. 3 , so dass sich der Elastomereinsatz in der Laibung der Queröffnung 40 bzw. 50 festklemmt. Da der Schraubbereich konisch ist, entsteht auch eine Kraftkomponente in Richtung aus der Queröffnung heraus, was zum Festspannen des Anschlagswulstes 21 am inneren Rand 41 bzw. 51 der Queröffnung 40 bzw. 50 führt. Diese Anpressung des Anschlagswulstes 21 wird noch durch das Eingriffsende 12 des Anschlussstutzens 1 unterstützt, weil dieser an der Stützrippe 27 bzw. 37 anliegt und diese gewissermaßen nach außen schwenkt.

Nach der Montage des Anschlussstutzens 1 wird die Nebenrohrleitung an den Anschlussstutzen abdichtend montiert, was nicht weiter beschrieben werden muss.

Mit der Erfindung wird eine Anschlussvorrichtung für eine Nebenrohrleitung geschaffen, die universell für dickwandige und dünnwandige Rohre gebaut und verwendet werden kann und die gut und zuverlässig abdichtet.

## Patentansprüche

1. Anschlussvorrichtung für eine Nebenrohrleitung, umfassend eine Queröffnung (40, 50) in einer Hauptleitung (5), in einem Schacht oder in einer Wand (4),
einen hohlstopfenförmigen, relativ weichen Elastomereinsatz (2, 3), dessen Außenseite (20, 30) an die Queröffnung (40, 50) angepasst ist, und dessen Innenseite (23, 33) einen konischen Schraubbereich (25, 35) aufweist, und einen relativ härteren Anschlussstutzen (1), der ein Eingriffseinde (12), einen konischen Mittelteil (13) mit Außengewinde (15) und ein Antriebsende (14) aufweist, wobei
der Elastomereinsatz (2, 3) mit Bezug auf die Queröffnung (40, 50) ein inneres Ende mit einem Anschlagwulst (21, 31) aufweist, der - bei montierter Anschlussvorrichtung - am inneren Rand (41, 51) der Queröffnung anliegt, und
das Eingriffsende (12) des Anschlussstutzens (1) bei montierter Anschlussvorrichtung abstützend am inneren Ende des Elastomereinsatzes (2, 3) anliegt, wobei der Anschlussstutzen (1) infolge des konischen Schraubbereichs (13) den Elastomereinsatz (2, 3) gegen die Laibung der Queröffnung (40, 50) presst und der Anschlagswulst (21, 31) gegen den inneren Rand (41. 51) der Queröffnung gezogen und gedrückt wird, wobei
der Elastomereinsatz (2, 3) auf der Innenseite seines Wulstendes (21, 31) eine umlaufende Stützrippe (27, 37) aufweist, die zur Zusammenarbeit mit dem Eingriffsende (12) des Anschlussstutzens (1) ausgebildet ist und der Elastomereinsatz (2, 3) einen Dichtlippenkragen (22, 32) zur Auflage am äußeren Rand (42, 52) der Queröffnung (40, 50) aufweist.

2. Anschlussvorrichtung nach Anspruch 1,
**dadurch gekennzeichnet, dass** das Verhältnis der Flächengröße der Dichtfläche des Elastomereinsatzes (2, 3) zu der Flächengröße der Außenseite des Elastomereinsatzes (2, 3) im Bereich von 0,1 bis 0,5 liegt.

3. Anschlussvorrichtung nach Anspruch 2,
**dadurch gekennzeichnet, dass** das Dichtflächenverhältnis im Bereich von 0,15 bis 0,3 liegt.

4. Anschlussvorrichtung nach Anspruch 1,
**dadurch gekennzeichnet, dass** der flächenmäßige Auflageanteil zur Gesamtfläche der Anlageseite des Dichtlippenkragens (22, 32) im Bereich zwischen 0,05 und 0,3 liegt.

5. Anschlussvorrichtung nach Anspruch 4,
**dadurch gekennzeichnet, dass** der Auflageanteil im Bereich zwischen 0,1 und 0,15 liegt.

6. Anschlussvorrichtung nach einem der Ansprüche 1 bis 5, **dadurch gekennzeichnet, dass** zur Anpassung des Elastomereinsatzes (2) an eine Queröffnung (40) in einer ebenen oder schwach gekrümmten Wand (4) der Anschlagswulst (21) sich generell parallel zur Ebene der Wand (4) erstreckt.

7. Anschlussvorrichtung nach einem der Ansprüche 1 bis 5, **dadurch gekennzeichnet, dass** zur Anpassung des Elastomereinsatzes (3) an eine Queröffnung (50) in einer Rohrwand (5) der Anschlagswulst (31) sich generell parallel zur Rohrwand (5) entlang des Randes (51) der Queröffnung (50) erstreckt.

8. Anschlussvorrichtung nach einem der Ansprüche 1 bis 7. **dadurch gekennzeichnet, dass** die zur Anpressung an die Laibung der Queröffnung (50) vorgesehene Dichtfläche (30) des Elastomereinsatzes (3) konvex gekrümmt ist.

## Claims

1. Connection device for an auxiliary pipeline, comprising a transverse opening (40, 50) in a main line (5), in a shaft or in a wall (4), a relatively soft elastomeric insert (2, 3) in the form of a hollow stopper, the outer side (20, 30) of which is adapted to the transverse opening (40, 50), and the inner side of which has a conical screw region (25, 35), and a relatively harder connection piece (1) which has an engagement end (12), a conical central part (13) having an external thread (15) and a drive end (14), wherein the elastomeric insert (2, 3) has, with respect to the transverse opening (40, 50), an inner end having a stop bead (21, 31) which - with the connection device mounted - butts against the inner rim (41, 51) of the transverse opening, and the engagement end (12) of the connection piece (1), with the connection device mounted, butts in a supporting manner against the inner end of the elastomeric insert (2, 3), wherein the connection piece (1), on account of the conical screw region (13), presses the elastomeric insert (2, 3) against the interior surface of the transverse opening (40, 50) and the stop bead (21, 31) is pulled and pushed against the inner rim (41, 51) of the transverse opening, wherein the elastomeric insert (2, 3) has on the inner side of its bead end (21, 31) a circumferential support rib (27, 37) which is formed to interact with the engagement end (12) of the connection piece (1) and the elastomeric insert (2, 3) has a sealing lip collar (22, 32) for bearing against the outer rim (42, 52) of the transverse opening (40, 50).

2. Connection device according to Claim 1, **characterized in that** the ratio of the surface area of the sealing surface of the elastomeric insert (2, 3) to the surface area of the outer side of the elastomeric insert (2, 3) is in the range of 0.1 to 0.5.

3. Connection device according to Claim 2, **characterized in that** the sealing surface area ratio is in the range of 0.15 to 0.3.

4. Connection device according to Claim 1, **characterized in that** the bearing proportion in terms of area with respect to the overall area of the abutment side of the sealing lip collar (22, 32) is in the range between 0.05 and 0.3.

5. Connection device according to Claim 4, **characterized in that** the bearing proportion is in the range between 0.1 and 0.15.

6. Connection device according to one of Claims 1 to 5, **characterized in that**, in order to adapt the elastomeric insert (2) to a transverse opening (40) in a planar or slightly curved wall (4), the stop bead (21) extends generally parallel to the plane of the wall (4).

7. Connection device according to one of Claims 1 to 5, **characterized in that**, in order to adapt the elastomeric insert (3) to a transverse opening (50) in a tube wall (5), the stop bead (31) extends generally parallel to the tube wall (5) along the rim (51) of the transverse opening (50).

8. Connection device according to one of Claims 1 to 7, **characterized in that** the sealing surface (30), provided for pressing against the interior surface of the transverse opening (50), of the elastomeric insert (3) is curved in a convex manner.

## Revendications

1. Dispositif de raccordement pour un conduit tubulaire secondaire, comprenant une ouverture transversale (40, 50) dans un conduit principal (5), dans une gaine ou une paroi (4), un insert en élastomère relativement mou (2, 3), en forme de bouchon creux, dont le côté extérieur (20, 30) est adapté à l'ouverture transversale (40, 50), et dont le côté intérieur (23, 33) présente une région filetée conique (25, 35), et une tubulure de raccordement (1) relativement plus dure, qui présente une extrémité d'engagement (12), une partie centrale conique (13) avec un filetage extérieur (15) et une extrémité d'entraînement (14), l'insert élastomère (2, 3) présentant, par rapport à l'ouverture transversale (40, 50), une extrémité intérieure avec un bourrelet de butée (21, 31) qui, lorsque le dispositif de raccordement est monté, s'applique contre le bord interne (41, 51) de l'ouverture transversale, et l'extrémité d'engagement (12) de la tubulure de raccordement (1), lorsque le dispositif de raccordement est monté, s'applique en s'appuyant contre l'extrémité intérieure de l'insert élastomère (2, 3), la tubulure de raccordement (1), du fait de la région filetée conique (13) de l'insert élastomère (2, 3), presse contre l'intrados de l'ouverture transversale (40, 50) et le bourrelet de butée (21, 31) est tiré et pressé contre le bord interne (41, 51) de l'ouverture transversale, l'insert élastomère (2, 3) présentant sur le côté intérieur de son extrémité de bourrelet (21, 31) une nervure de support périphérique (27, 37) qui est réalisée de manière à coopérer avec l'extrémité d'engagement (12) de la tubulure de raccordement (1) et l'insert élastomère (2, 3) présentant un rebord de lèvre d'étanchéité (22, 32) pour l'appui sur le bord extérieur (42, 52) de l'ouverture transversale (40, 50).

2. Dispositif de raccordement selon la revendication 1, **caractérisé en ce que** le rapport de la superficie de la surface d'étanchéité de l'insert élastomère (2, 3) sur la superficie du côté extérieur de l'insert élastomère (2, 3) est de l'ordre de 0,1 à 0,5.

3. Dispositif de raccordement selon la revendication 2, **caractérisé en ce que** le rapport des surfaces d'étanchéité est de l'ordre de 0,15 à 0,3.

4. Dispositif de raccordement selon la revendication 1, **caractérisé en ce que** la proportion d'appui superficiel par rapport à la surface totale du côté d'appui du rebord de lèvre d'étanchéité (22, 32) est de l'ordre de 0,05 à 0,3.

5. Dispositif de raccordement selon la revendication 4, **caractérisé en ce que** la proportion d'appui est de l'ordre de 0,1 à 0,15.

6. Dispositif de raccordement selon l'une quelconque des revendications 1 à 5, **caractérisé en ce que** pour l'adaptation de l'insert élastomère (2) à une ouverture transversale (40) dans une paroi plane ou à faible courbure (4), le bourrelet de butée (21) s'étend généralement parallèlement au plan de la paroi (4).

7. Dispositif de raccordement selon l'une quelconque des revendications 1 à 5, **caractérisé en ce que** pour l'adaptation de l'insert élastomère (3) à une ouverture transversale (50) dans une paroi tubulaire (5), le bourrelet de butée (31) s'étend généralement parallèlement à la paroi tubulaire (5) le long du bord (51) de l'ouverture transversale (50).

8. Dispositif de raccordement selon l'une quelconque des revendications 1 à 7, **caractérisé en ce que** la surface d'étanchéité (30) de l'insert élastomère (3) prévue pour le pressage contre l'intrados de l'ouverture transversale (50) a une courbure convexe.
